# DEMANDE DE BREVET EUROPEEN

(11) **EP 3 009 819 A1**
(43) Date de publication de la demande: **20.04.2016**
(21) Numéro de dépôt: 15190237.6
(22) Date de dépôt: 16.10.2015
(51) Int. Cl.: G01L 1/18, G01L 1/22, G01F 1/07, G01F 1/20, G01F 1/28

(54) **SYSTEME DE MESURE DE FORCE TANGENTIELLE APPLIQUEE PAR UN FLUIDE A SENSIBILITE AUGMENTEE**

(30) Priorité: 17.10.2014 FR 1460024
(71) Demandeur: Commissariat à l'Énergie Atomique et aux Énergies Alternatives, 75015 Paris (FR)
(72) Inventeur: ROBERT, Philippe, 38000 GRENOBLE (FR); COUTIER, Caroline, 38000 GRENOBLE (FR)
(74) Mandataire: Brevalex

(57) **Abrégé**

Système de mesure d'une force tangentielle exercée par un fluide, ledit système comportant :
- un conduit (22) dans lequel s'écoule le fluide, le conduit comportant une surface intérieure en contact avec le fluide, et une cavité (24) disposée dans ladite surface intérieure du conduit (22),
- un dispositif MEMS et/ou NEMS de mesure de force tangentielle comportant un support (4), une plaque mobile (2) suspendue au support par une liaison pivot, ladite plaque mobile (2) comportant une première face (2.1) sur laquelle le fluide applique une force tangentielle, ledit dispositif étant solidaire du conduit de sorte que la première face (2.1) de la plaque mobile (2) affleure la surface intérieure (26) du conduit (22), ledit dispositif comportant deux jauges de contrainte piézorésistives suspendues entre la plaque mobile (2) et au support, la force tangentielle appliquant aux jauges une force de compression ou de traction sensiblement pure.

## Description

La présente invention se rapporte à un système de mesure de force tangentielle à sensibilité augmentée, par exemple destiné à la réalisation de débitmètres, de préférences microélectromécaniques et/ou nanoélectromécaniques à sensibilité améliorée.

Il existe plusieurs catégories de débitmètre dont les débitmètres utilisant la mesure de contrainte pariétale ou contrainte de cisaillement sur la paroi du conduit dans lequel s'écoule le fluide, contrainte qui existe pour tout fluide possédant une viscosité. Un fluide présente une vitesse nulle dans la zone de contact avec la paroi du conduit. Par ailleurs toute différence de vitesse au sein d'un fluide visqueux entraîne des contraintes de cisaillement, les particules fluides allant plus vite sont freinées par celles allant moins vite.

Parmi les débitmètres, il existe les débitmètres à fil chaud qui fonctionnent sur le principe de transfert thermique, la vitesse de perte en température du fil chauffant étant fonction du débit du fluide à mesurer.

Il existe également les débitmètres à obstacle, un obstacle est disposé dans le flux dont on veut mesurer le débit, la pression est mesurée de part et d'autre de l'obstacle, la différence de pression étant proportionnelle à la contrainte de cisaillement sur la paroi.

Ces débitmètres à fil chaud et à obstacle mettent en oeuvre une méthode de mesure indirecte, puisqu'ils ne permettent d'obtenir directement la valeur du débit. L'utilisation des ces débitmètres impose donc une bonne connaissance du fluide à mesurer et une calibration préalable suivant les différentes conditions du débit.

Il existe également des débitmètres à élément flottant. Ces débitmètres comportent un élément de type plaque, et fonctionnent en mesurant la force tangentielle qui est appliquée à la plaque mobile par le fluide. Le capteur est par exemple monté mobile dans un évidement de la paroi du conduit dans lequel le flux s'écoule de sorte que la plaque affleure la surface intérieure du conduit. Sous l'effet de des forces tangentielles sur cet élément, celui-ci se déplace. La valeur de la contrainte de cisaillement se déduit directement du déplacement de l'élément mobile. Ces débitmètres utilisent donc une méthode de détermination directe. Cependant il présente généralement une résolution spatiale faible et une résolution temporelle faible. La mise en oeuvre des débitmètres réalisés à partir de systèmes microélectromécaniques ou MEMS (Microelectromechanical systems en terminologie anglo-saxonne), permet d'atteindre une bonne résolution spatiale.

Le document *"*A Microfabricated Floating-Element Shear Stress Sensor Using Wafer-Bonding Technology" - Javad Shajii, Kay-Yip Ng, and Martin A. Schmidt - Journal Of Microelectromechanical Systems, Vol. I, No. 2, June 1992 décrit un débitmètre à détection piézorésistive. Le débitmètre comporte un élément flottant formée d'une plaque suspendue par quatre bras. Les bras sont utilisés à la fois comme support mécanique de la plaque et comme jauges de contrainte piézorésistives. La longueur des bras de suspension est disposée dans le sens du flux, sous l'effet du passage du fluide, le déplacement de la plaque induit une contrainte en compression sur les deux bras placés en aval, et une contrainte en tension sur les deux autres placés en amont. La mesure se fait alors par un demi-pont de Wheatstone. Les bras de suspension formant les jauges de mesure présentent des dimensions relativement importantes, ce qui rend le débitmètre peu sensible.

Le document *"*Design and characterization of microfabricated piezoresistive floating element-based shear stress sensors"A. Alvin Barlian, Sung-Jin Park, Vikram Mukundan, Beth L. Pruitt - Sensors & Actuators, A. 2007; 134:77-87 décrit également un débitmètre à élément flottant à détection piézorésistive. Dans ce document, les bras sont sollicités en flexion et leur déformation est mesurée par des jauges de contrainte piézorésistives implantées sur le flanc des bras de flexions. Le fait de travailler en flexion est préjudiciable à la sensibilité du débitmètre.

### EXPOSÉ DE L'INVENTION

C'est par conséquent un but de la présente invention d'offrir un système de mesure de force tangentielle appliqué par un fluide à un élément flottant présentant une sensibilité augmentée.

Le but énoncé ci-dessus est atteint par un système comportant un conduit dans lequel s'écoule le fluide et un capteur de force tangentielle disposé dans une cavité d'une surface intérieure du conduit, le capteur de force tangentielle comportant une plaque mobile suspendue comprenant une face sur laquelle le fluide applique la force tangentielle. Le capteur est disposé dans la cavité de sorte que la face de la plaque mobile sur laquelle le fluide applique la force tangentielle affleure au moins la surface intérieure du conduit entourant la cavité. La plaque mobile est articulée par rapport à un support par au moins une liaison pivot. Le système comportant également au moins une jauge piézorésistive suspendue entre la plaque mobile et le support et distinct de la liaison pivot, la jauge étant disposée de sorte que le déplacement de la plaque mobile autour de la liaison pivot génère une contrainte dans la jauge principalement le long de l'axe de la jauge afin qu'elle soit soumise à une contrainte de compression sensiblement pure ou une contrainte de traction sensiblement pure. En outre, la jauge de contrainte est disposée de sorte que la contrainte appliquée à la plaque mobile par le fluide soit amplifiée par effet levier

Le système de mesure présente une sensibilité augmentée.

Selon l'invention, on dispose le capteur dans une cavité disposée dans la surface intérieure du conduit de sorte que la plaque mobile se situe dans la zone dans laquelle le fluide présente un gradient de vitesse entre sa vitesse dans le conduit et sa vitesse nulle au niveau de la surface intérieure du conduit et subisse une contrainte de cisaillement. Le capteur est tel qu'il mesure l'effort principalement, voire uniquement sur la surface de la plaque mobile qui affleure la surface intérieur du conduit, et que quasiment aucun effort, voire aucun effort, ne s'exerce sur la surface de la plaque mobile qui est opposée à la surface affleurant la surface intérieure du conduit.

Par ailleurs, on sépare la fonction de maintien mécanique de la plaque mobile et de mesure piézorésistive du déplacement de la plaque mobile. Ainsi la fonction mécanique et la fonction de mesure peuvent être optimisées séparément. Plus particulièrement, la ou les jauges piézorésistive peuvent être plus fines que la plaque mobile, on obtient une concentration des contraintes, et un capteur qui présente une meilleure sensibilité.

La ou les jauges suspendues sont plus stables, notamment en température, par rapport aux capteurs piézorésistifs à jauges implantées.

En outre, la jauge ou les jauges travaillent en traction ou en compression sensiblement pure, ce qui permet encore d'augmenter la sensibilité et la linéarité.

Grâce à cette sensibilité accrue, il est possible de réduire la taille de la plaque mobile et donc d'obtenir une meilleure résolution spatiale.

De manière très avantageuse, le capteur de force tangentielle peut être utilisé pour former un débitmètre ou capteur de débit. En effet, La contrainte de cisaillement appliquée à un élément par un fluide est une force appliquée de manière tangentielle à la surface de cet élément par le fluide. Ainsi la mesure d'une force tangentielle appliquée par le fluide revient à mesurer la contrainte de cisaillement appliquée à cet élément par le fluide.

Le système selon l'invention peut en outre être rendu plus fiable de manière relativement aisé, par exemple vis-à-vis des débits parasites ou de pollutions (poussière, débris) dans le fluide, par exemple en ajoutant un film en matériau souple de sorte à former une barrière au fluide entre la plaque mobile et le support. Par exemple, il peut s'agir d'un film encapsulant tout ou partie de la plaque mobile.

La présente invention a alors pour objet un système de mesure d'une force tangentielle exercée par un fluide, ledit système comportant :
- un conduit dans lequel est destiné à s'écouler le fluide, le conduit s'étendant sur au moins portion dans une direction donnée, dite direction d'écoulement, le conduit comportant une surface intérieure destinée à être en contact avec le fluide, et au moins une cavité disposée dans ladite surface intérieure du conduit,
- au moins un dispositif MEMS et/ou NEMS de mesure de force tangentielle comportant un support présentant un plan moyen et une plaque mobile, ladite plaque mobile étant suspendue au support par au moins une liaison pivot, ladite liaison pivot ayant un axe perpendiculaire au plan moyen du support, ladite plaque mobile comportant une première face sur laquelle le fluide applique une force tangentielle et une deuxième face opposée à la première face, ledit dispositif étant solidaire du conduit et étant disposé dans la cavité de sorte que la première face de la plaque mobile affleure au moins une zone de la surface intérieure du conduit entourant la cavité, ledit dispositif comportant également au moins une jauge de contrainte piézorésistive suspendue et mécaniquement liée à la plaque mobile et au support, ladite jauge étant disposée dans la cavité de sorte que la force tangentielle appliquée à la première surface de la plaque mobile par le fluide selon la direction d'écoulement applique une force de compression ou de traction à ladite jauge de contrainte piézorésistive.

Dans la présente demande, on entend par "plaque" tout élément présentant une surface supérieure voire très supérieure à son épaisseur quelque soit sa géométrie

La cavité peut ou non traverser la paroi du conduit.

La distance séparant le plan contenant la première face de la plaque mobile et le plan contenant au moins la zone entourant la cavité est de préférence inférieure ou égale à 200 µm et avantageusement inférieure ou égale à 100 µm,

La jauge est avantageusement disposée au plus près de l'axe de la liaison pivot.

Le système de mesure peut de manière avantageuse comporter au moins deux jauges montées en différentielle connectées électriquement en demi-pont de Wheatstone ou au moins quatre jauges montées en différentielle connectées électriquement en pont de Wheatstone.

Dans un exemple de réalisation, la plaque mobile est suspendue au support par deux liaisons pivot ledit dispositif comportant au moins deux jauges piézorésistives. Au moins un bras de transmission d'effort rigide peut relier la plaque mobile à chaque liaison pivot, au moins une jauge de contrainte piézorésistive étant suspendue entre un bras de transmission de force et le support

Avantageusement, chaque bras de transmission de force est relié à la plaque mobile par au moins des moyens déformables élastiquement au moins dans la direction perpendiculaire à l'écoulement du fluide.

La ou les jauges de contrainte peuvent présenter une épaisseur comprise entre 100 nm et 500 nm et la plaque mobile peut avoir une épaisseur comprise entre 3 µm et 40 µm.

Selon une caractéristique additionnelle, la liaison pivot comporte deux poutres sensiblement de même longueur ancrées sur le support en deux points distincts et ancrées sur la plaque mobile en un point par lequel passe l'axe de la liaison pivot.

Avantageusement, le système de mesure comporte des moyens pour limiter le débit de fluide entre la plaque mobile et le support.

Ces moyens peuvent être formés par une structuration du support et/ou de la plaque mobile de sorte à ménager au moins une zone de section d'écoulement réduite entre le support et la plaque mobile. La structuration est par exemple réalisée sur la deuxième face de la plaque mobile et/ou sur une zone du support en regard de ladite face.

Avantageusement, le système de mesure comporte des moyens pour empêcher l'écoulement de fluide entre la plaque mobile et le support. Selon un exemple de réalisation, ces moyens peuvent comporter un élément souple encapsulant au moins partiellement la plaque mobile et empêchant le fluide de s'écouler entre la plaque mobile et le support.

Par exemple, l'élément est un polymère ou un polyimide.

Selon un autre exemple de réalisation, les moyens pour empêcher l'écoulement de fluide entre la plaque mobile et le support comportent un film en matériau souple recouvrant la première face de la plaque mobile et au moins une partie du support.

La plaque mobile peut comporter des lumières, lesdites lumières étant obturées par l'élément souple ou par le film

Le système de mesure peut avantageusement comporter des moyens pour réduire la sensibilité aux accélérations et vibrations parasites. Ces moyens peuvent comporter un contrepoids solidaire de la plaque mobile et protégé du fluide de sorte à ne pas subir de force tangentielle.

La présente invention a également pour objet un système de mesure de débit d'un fluide s'écoulant dans un conduit comportant au moins un système de mesure selon l'invention.

La présente invention a également pour objet un procédé de réalisation d'un système de mesure selon l'invention, ce procédé comportant :
- la formation d'une cavité dans la surface intérieure d'un conduit,
- la réalisation d'un dispositif de mesure de force tangentielle à partir d'un empilement formé d'un substrat, d'une couche sacrificielle et d'au moins une première couche d'un matériau conducteur ou semi-conducteur, comprenant la réalisation d'au moins une jauge piézorésistive dans la première couche, la réalisation de la plaque mobile et de la au moins une liaison pivot dans ledit empilement et la libération de la jauge, de la plaque mobile et de la liaison pivot.

La cavité peut être formée de sorte à être traversante ou non.

Après la formation de la jauge, une portion de protection peut être formée sur ladite jauge préalablement à la formation d'une deuxième couche d'un matériau conducteur ou semi-conducteur sur la première couche d'un matériau conducteur ou semi-conducteur.

Suite à la formation de la portion de protection, la deuxième couche d'un matériau semi-conducteur, conducteur ou isolant peut être formée sur la première couche d'un matériau conducteur ou semi-conducteur, et la plaque mobile et la liaison pivot étant réalisées au moins en partie dans cette deuxième couche.

Dans un exemple, le procédé peut comporter une étape de remplissage d'au moins l'entrefer latéral entre la plaque mobile et le support, ledit remplissage étant par exemple réalisé par dépôt en phase liquide par centrifugation pour former des moyens pour empêcher l'écoulement de fluide entre la plaque mobile et le support.

Dans un autre exemple, le procédé peut comporter une étape de formation d'un film sur la plaque mobile et sur au moins une partie du support de sorte à obturer l'entrefer latéral entre la plaque mobile et le support, ledit film étant par exemple formé par laminage pour former des moyens pour empêcher l'écoulement de fluide entre la plaque mobile et le support.

### BRÈVE DESCRIPTION DES DESSINS

La présente invention sera mieux comprise sur la base de la description qui va suivre et des dessins en annexe sur lesquels:
- la figure 1A est une vue de dessus d'un exemple de réalisation d'un système de mesure de force tangentielle selon l'invention comportant deux jauges piézorésistives montées en différentiel,
- la figure 1B est une vue en coupe le long du plan A-A de la figure 1A, la cavité n'étant pas représentée,
- la figure 2 est une vue en coupe schématique de le système de la figure 1A,
- la figure 3 est une vue de dessus d'un exemple de réalisation d'un capteur de force tangentielle comportant quatre jauges piézorésistives montées en différentiel,
- la figure 4 est une vue de dessus d'une variante de réalisation du capteur de force tangentielle la figure 3 montées en différentiel,
- la figure 5 est une vue de dessus d'un autre exemple de réalisation d'un capteur de force tangentielle comportant quatre jauges piézorésistives montées en différentiel,
- la figure 6A est une vue de dessus d'un exemple de réalisation d'un capteur de force tangentielle dans lequel les effets d'un débit de fluide parasite sous la plaque sont réduits,
- la figure 6B est une vue en coupe selon le plan B-B du dispositif de la figure 6A,
- la figure 7A est une vue de dessus d'un autre exemple de réalisation d'un capteur de force tangentielle dans lequel les effets d'un débit de fluide parasite sous la plaque sont réduits,
- la figure 7B est une vue en coupe selon le plan C-C du dispositif de la figure 7A,
- la figure 8A est une vue de dessus d'une variante de réalisation d'un capteur de force tangentielle de la figure 7A
- la figure 8B est une vue en coupe selon le plan D-D du dispositif de la figure 8A,
- la figure 9A est une vue de dessus d'une variante de réalisation d'un capteur de force tangentielle de la figure 7A
- la figure 9B est une vue en coupe selon le plan E-E du dispositif de la figure 9A,
- la figure 10A est une vue de dessus d'une variante de réalisation d'un capteur de force tangentielle de la figure 7A
- la figure 10B est une vue en coupe selon le plan F-F du dispositif de la figure 10A,
- la figure 11A est une vue de dessus d'un autre exemple de réalisation d'un capteur de force tangentielle dans lequel la sensibilité aux accélérations et vibrations parasites est limitée,
- la figure 11B est une vue en coupe selon le plan G-G du capteur de la figure 11A,
- la figure 12A est une vue de dessus d'un autre exemple de réalisation d'un capteur de force tangentielle offrant un accroissement de la force tangentielle s'exerçant sur le capteur,
- la figure 12B est une vue en coupe selon le plan H-H du capteur de la figure 13A,
- les figures 13A à 13G sont des représentations schématiques vues de dessus et en coupe de différentes étapes de réalisation d'un capteur de force tangentielle selon l'invention selon un exemple de procédé de réalisation,
- la figure 14 est une représentation d'un schéma électrique permettant la mesure par demi-pont de Wheatstone,
- les figures 15A à 15C sont des représentations schématiques du montage d'un capteur de force tangentielle dans un conduit.

### EXPOSÉ DÉTAILLÉ DE MODES DE RÉALISATION PARTICULIERS

La présente invention porte sur un système de mesure de la force tangentielle appliquée par un fluide, qu'il soit liquide ou gazeux. Ce système permet de réaliser de manière très avantageuse un dispositif de mesure de débit. Dans la suite de la description, le système est décrit dans une application à la mesure du débit, mais il sera compris que cela n'est en aucun cas limitatif, tous les exemples et variantes décrites s'appliquent à un système de mesure de force tangentielle de manière générale. Les expressions "contrainte de cisaillement" et "force tangentielle" sont utilisées indistinctement, la force tangentielle ou contrainte de cisaillement est schématisée par une flèche désignée F.

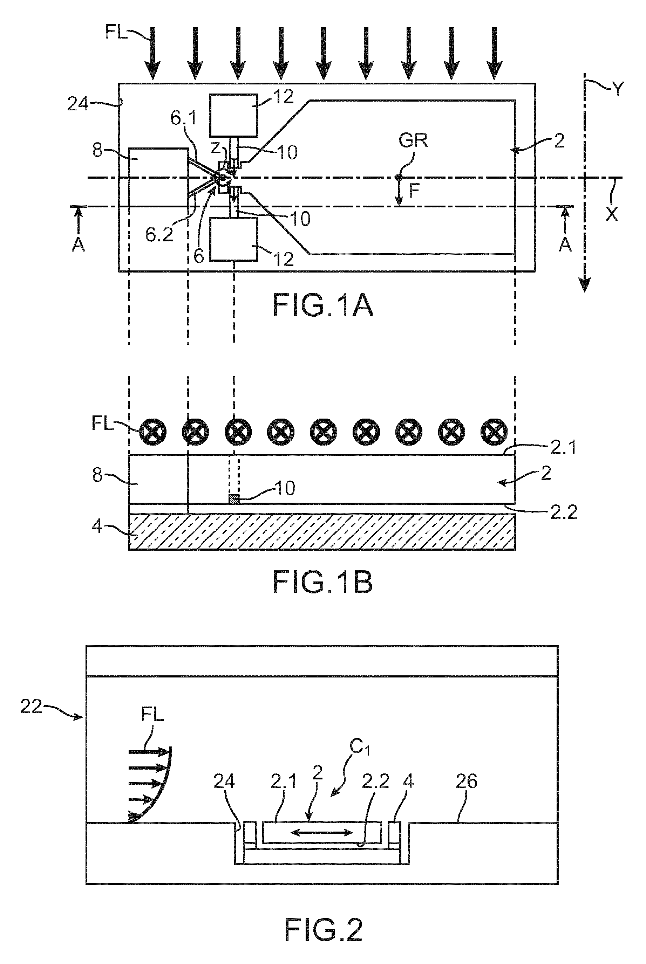

Sur la figure 1A, on peut voir un exemple de réalisation d'un capteur de débit désigné C1 monté dans un évidement 24 d'un conduit 22 dans lequel s'écoule le fluide. Plus généralement, le capteur est monté dans une cavité disposée dans la paroi du conduit. La cavité peut être traversante ou non. Dans le cas d'une cavité traversante, l'étanchéité pourrait être obtenue par le montage du capteur comme cela sera expliqué ci-dessous.

Le capteur C1 comporte une partie mobile 2 en forme de plaque et un support 4. La plaque 2 est mobile dans le plan du capteur désigné XY.

La plaque mobile 2 est destinée à être déplacée par le fluide dont on souhaite mesurer le débit. Le fluide s'écoule selon une direction Y et est symbolisé par les flèches FL.

La plaque mobile 2 est suspendue au support 4. Une liaison pivot 6 d'axe Z relie la plaque mobile 2 au support. L'axe Z est orthogonal au plan XY.

Dans l'exemple représenté, la liaison pivot 6 est formée par deux poutres 6.1, 6.2 flexibles dans le plan fixées par une extrémité à un plot 8 formant encastrement solidaire du support 4. Les deux poutres sont fixées au plot 8 en deux points distincts et par une autre extrémité à la plaque mobile 2 en un point commun définissant l'axe du pivot Z. Cette configuration permet d'obtenir avantageusement une rotation pure ou quasiment pure de la plaque mobile 2 autour de l'axe Z.

En variante, la liaison pivot pourrait être formée par une seule poutre se déformant en flexion, l'axe du pivot étant situé sensiblement au centre de la poutre.

Dans l'exemple représenté, le capteur comporte également deux jauges de contrainte piézorésistive 10, de type poutre suspendue entre la plaque mobile 2 et des deuxièmes plots 12 formant encastrement.

Les jauges s'étendent selon l'axe Y d'écoulement du flux dont on veut mesurer le débit. Elles sont disposées de part et d'autre de la plaque mobile 2 de sorte à être sollicitées en traction ou compression pure ou quasiment pure. En outre, elles sont montées en différentiel; lorsque la plaque mobile 2 se déplace autour de l'axe Z, l'une est sollicitée en traction l'autre est sollicitée en traction.

L'axe X et l'axe Z définissent un plan de symétrie de la liaison pivot 6.

Le centre de gravité de la plaque mobile est désigné GR et est contenu dans ledit plan XZ. Dans cet exemple de réalisation, le dispositif est orienté de sorte que le plan contenant l'axe Z et le centre de gravité GR soit perpendiculaire à la direction Y.

Nous allons rappeler ci-dessous le fonctionnement d'une jauge de contrainte piézorésistive. Lorsque la jauge est déformée le long de son axe, et que sa longueur varie, sa résistance électrique varie également, c'est en mesurant cette variation de résistance que l'on peut en déduire les contraintes tangentielles appliquée au fluide. La variation de la résistance électrique est mesurée en faisant circuler un courant électrique dans la jauge 10.

Du fait de la disposition des jauges par rapport à l'axe de rotation, un effet bras de levier apparaît amplifiant la contrainte appliquée aux jauges.

De manière très avantageuse et comme cela est représenté, les jauges sont reliées à la plaque mobile au plus près de l'axe de pivot Z. Ainsi elles bénéficient d'un effet bras de levier le plus important possible. De préférence, la distance entre l'axe de pivot Z et la projection sur l'axe X de leur point d'attache sur plaque mobile est de l'ordre de quelques µm, par exemple 5 µm.

Des moyens (non représentés) pour appliquer une tension constante aux jauges 10, et pour mesurer une variation de courant circulant dans les jauges et de traitement des mesures de variation de courant sont associées au dispositif C1.

Dans l'exemple représenté, la plaque mobile 2 comporte une première partie 14 parallélépipédique de plus grande largeur, une deuxième partie 16 trapézoïdale dont la grande base est commune à un côté de la première partie et une troisième partie 18 raccordée à la liaison pivot 6. La plaque mobile 2 présente sensiblement une symétrie par rapport à l'axe X. La troisième partie 18 est également de forme parallélépipédique, elle présente une plus petite largeur confondue avec la petite base de la deuxième partie.

La plaque mobile 2 est généralement monolithique, la division en trois parties a pour but de simplifier la description, et n'est pas nécessairement représentative de la réalisation pratique.

Les jauges 10 sont reliées à la plaque mobile au niveau de la troisième partie 18. De manière avantageuse, des évidements 20 sont réalisés dans la troisième partie 18 de la plaque mobile de part et d'autre de l'axe X pour permettre le raccordement des jauges 10 à la plaque mobile en un lieu situé sur l'axe X ou au plus près de celui-ci. Cette configuration présente l'avantage que toute ou presque toute l'intensité de contrainte appliquée par le déplacement de la plaque mobile 2 participe à la déformation selon l'axe Y des jauges de contrainte 10. En effet, lorsque l'ancrage des jauges 10 8 est décalé par rapport à l'axe passant par la liaison pivot et le centre de gravité GR, une partie de la contrainte de déformation exerce sur la jauge un effort de flexion combiné à un effort de compression ou de traction, cet effort de flexion ne participant pas ou très peu à la variation de la résistance électrique des jauges piézorésistives 8.

Il sera compris que la forme de la plaque mobile de la figure 1A n'est pas limitative, celle-ci pouvant présenter toute forme de parallélépipède, par exemple carrée ou hexagonale ou une forme ronde ou ovale.

Dans l'exemple représenté, deux jauges sont mises en oeuvre permettant avantageusement un montage en différentiel, ce qui permet de limiter les dérives du capteur, notamment les dérives en température. Mais un capteur de débit comportant une seule jauge piézorésistive ne sort pas du cadre de la présente invention.

Sur la figure 2, on peut voir le système de la figure 1A vu en coupe selon une autre vue que celle de la figure 1B dans laquelle le conduit 22 et l'évidement 24 sont représentés.

Le capteur C1 est monté dans l'évidement 24 dans la paroi du conduit, le support 4 du capteur étant fixé au fond de l'évidement 24 de sorte que la face supérieure 2.1 de la plaque mobile 2 affleure la surface intérieure 26 du conduit. Le capteur est orienté dans le conduit de sorte que la direction d'écoulement du fluide soit parallèle à l'axe Y. on considère que la face supérieure 2.1 affleure la surface intérieure 26 du conduite lorsque, de préférence, la distance séparant la surface supérieure 2.1 de la plaque mobile et la surface intérieure 26 du conduit est inférieure ou égale à 200 µm, de manière préférée inférieure ou égale à 100 µm, la surface supérieure 2.1 pouvant être en retrait ou en saillie de la surface intérieure 26 du conduit 22.

La distance entre la face inférieure 2.2 de la plaque mobile et le support est typiquement inférieure à 10 µm, ce qui permet de limiter l'apparition d'un débit sous la plaque mobile.

De préférence, l'entrefer entre les bords latéraux de la masse qui sont parallèles à l'axe X et le support est typiquement inférieur à 5µm, ce qui permet d'avoir peu et avantageusement de n'avoir pas de débit entre les bords latéraux et le support sur l'épaisseur de la masse mobile, ce qui rend négligeables les effets parasites

Le fonctionnement du système de mesure de la contrainte de cisaillement va maintenant être décrit:
Le fluide F circulant dans le canal fluidique exerce une contrainte de cisaillement sur la surface intérieure du conduit et donc sur la plaque mobile affleurant la surface 26, qui tend à la faire tourner autour de l'axe pivot Z. Le déplacement de cette plaque mobile induit une contrainte dans les jauges piézorésistives suspendues 10. Cette contrainte fait varier la résistance des jauges. La mesure de cette variation de résistance, proportionnelle à la contrainte de cisaillement s'exerçant sur la plaque mobile 2, donc proportionnelle au débit dans le canal, peut être lue via un demi-pont de Wheatstone.

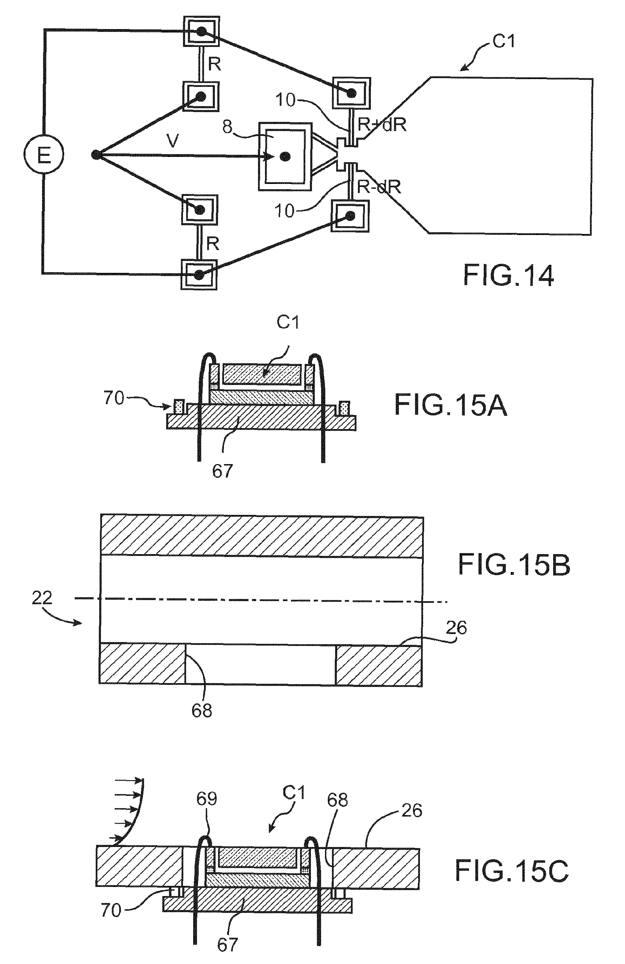

La figure 14 illustre le montage électrique associé au capteur C1 permettant de faire des mesures par demi-pont de Wheatstone. Le montage en demi-pont de Wheatstone est bien connu de l'homme du métier et ne sera pas détaillé. On utilise une source de tension E, des résistances R de valeur constante formée par exemple par des jauges fixes et les jauges forment des résistances à valeur variable R + dR. La variation de courant est déterminée par mesure de la variation de tension V sur le premier plot d'ancrage 8.

Comme cela sera décrit ci-dessous on peut mettre en oeuvre un pont de Wheatstone, ou même un quart de pont de Wheatstone.

Selon l'invention, le maintien mécanique de la plaque mobile est distinct des moyens de mesure, ces moyens de mesure peuvent alors présenter avantageusement une section réduite ce qui permet d'avoir une concentration de contrainte et donc un gain en sensibilité tout en conservant une rigidité suffisante de la plaque mobile. Sur la figure 1B, on peut voir la section d'une des jauges 10. Elle présente une épaisseur très inférieure à celle de la plaque mobile et à celle des poutres formant la liaison pivot. La ou les jauges a ou ont par exemple une épaisseur comprise entre 100 nm et 500 nm et la plaque mobile a une épaisseur comprise entre 3 µm et 40 µm. En outre la ou les jauges présentent une largeur réduite, par exemple inférieure à 1µm.

Selon un exemple d'un procédé de réalisation, la face de la jauge 10 en regard du substrat 4 se situe dans le même plan que la face de la plaque mobile 2 en regard du substrat 4.

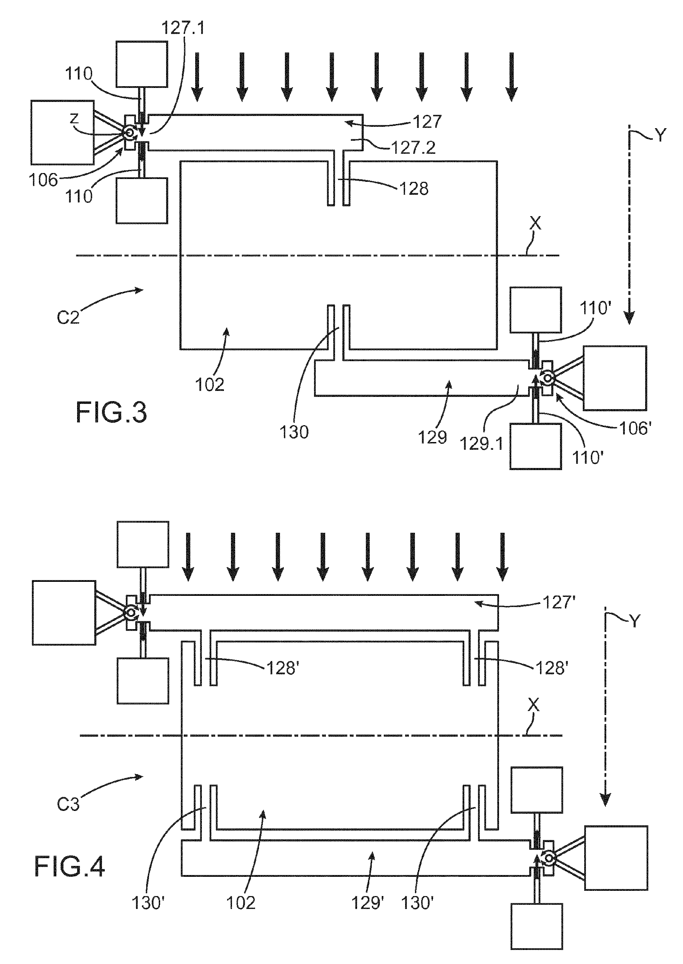

Sur les figures 3, 4 et 5 on peut voir des exemples de réalisation de capteurs de débit mettant en oeuvre deux paires de jauges piézorésistives formant ainsi un pont de Wheatstone complet.

Sur la figure 3, le capteur C2 comporte une plaque mobile 102 ayant une forme de rectangle s'étendant selon sa plus grande dimension dans la direction de l'axe X. La plaque mobile 102 est suspendue par deux liaisons pivots 106, 106' disposé de part et d'autre d'un plan de symétrie de la plaque mobile 102 contenant l'axe X et perpendiculaire au plan moyen de la structure.

La plaque mobile est reliée à chaque liaison pivot par l'intermédiaire d'un bras de transmission 127 de force s'étendant parallèlement à l'axe X. Le bras est relié par une première extrémité longitudinale 127.1 au support par la liaison pivot 206 et par une deuxième extrémité longitudinale 127.2 à la plaque mobile. Le bras forme une liaison rigide. Par ailleurs deux jauges 110 sont suspendues entre la première extrémité 127.1 du bras 127 et le support 104 afin de mesurer le pivotement du bras 127 dans le plan autour de l'axe Z. Les jauges sont montées en différentiel.

De manière avantageuse, le bras 127 est relié à la plaque mobile 102 par des moyens déformable élastiquement au moins le long de l'axe X de sorte à transmettre le maximum d'effort appliqué sur la plaque mobile par le fluide à la liaison rigide sans entraver le mouvement de la plaque mobile 102. Ces moyens élastiques 128 donnent un degré de liberté entre la plaque mobile 102 et le bras de transmission 127, formant des moyens élastiques de relaxation. Dans l'exemple représenté, les moyens élastiques 128 sont formés par une lame souple.

Le deuxième bras de transmission 129 s'étend le long du bord de la plaque mobile opposé à celui le long duquel s'étend le premier bras de transmission 127 et est relié au support par une deuxième liaison pivot, cette deuxième liaison pivot étant située à l'opposé de la première liaison pivot par rapport à l'axe Y et à l'écoulement du flux. Comme pour le premier bras de transmission 127, le deuxième bras de transmission 129 est raccordé avantageusement à la plaque mobile 102 par des moyens élastiques 130 déformables au moins dans la direction de l'axe X. Deux jauges 110' sont suspendues entre la première extrémité longitudinale 129.1 du deuxième bras de transmission 129 et le support. Les jauges sont montées en différentiel.

Les quatre jauges 110, 110' sont connectées électriquement de sorte à forme un pont de Wheatstone complet.

Sur la figure 4, on peut voir une autre variante de réalisation C3 du capteur de la figure 3, dans laquelle chaque bras de transmission 127', 129' est raccordé à la plaque mobile en deux points distincts, de manière avantageuse par deux moyens de transmission 128', 130'. Cette variante offre une rigidité selon la direction Z et une rigidité en torsion autour de l'axe Y augmentées par rapport au capteur de la figure 3.

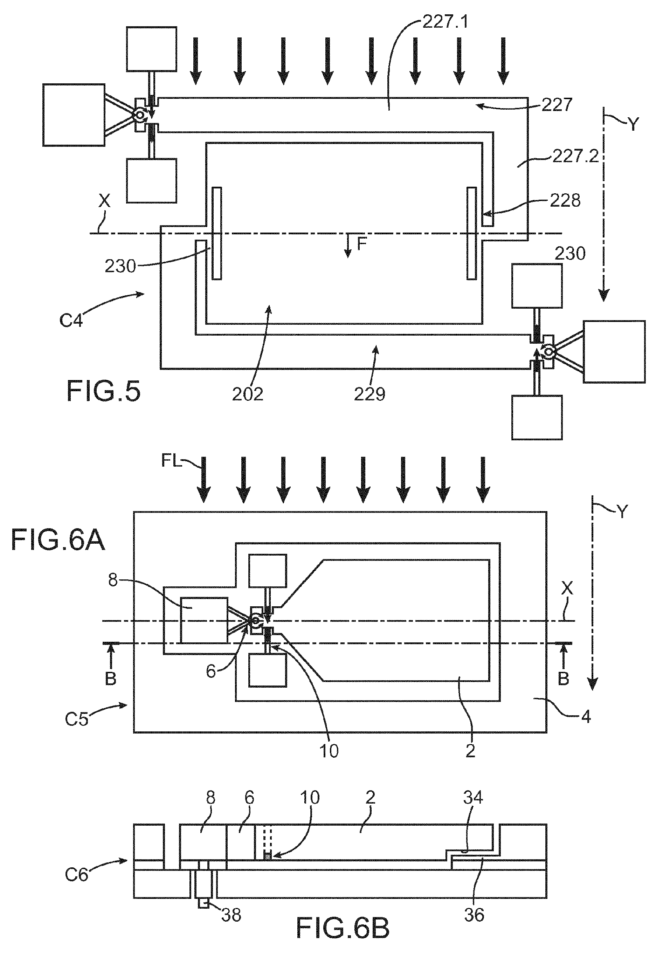

Sur la figure 5, on peut voir une autre variante C4 du capteur de la figure 3, dans laquelle les bras de transmission 227, 229 se raccordent à la plaque mobile 202 au niveau de ses extrémités longitudinales le long de l'axe X. Les bras ont alors la forme de L, une branche 227.1 du L longeant un côté de plus grande longueur de la plaque mobile et une branche 227.2 du L longeant en partie un bord de plus petite longueur. Les bras de transmission étant connectés à la plaque mobile au niveau de leurs extrémités longitudinales opposées à celles auxquelles les jauges sont suspendues, l'amplification de la contrainte par effet bras de levier est augmentée.

De manière avantageuse, les bras 227, 229 sont raccordés à la plaque mobile 202 par des moyens élastiques 228, 230 déformables élastiquement dans la direction de l'axe X. Dans cette variante, les moyens élastiques sont formés par la découpe de deux lumières de forme rectangulaire dans de la plaques mobile 202 dans la direction de l'axe X de sorte à définir deux bandes étroites dans la plaque mobile 202 s'étendant le long du bord de plus petite longueur de la plaque 202. Elles offrent alors une élasticité dans la direction X.

Le fluide s'écoulant dans le conduit et dont on souhaite mesurer le débit, s'écoule le long de l'axe X sur la surface supérieure de la plaque mobile et du fait des contraintes de cisaillement déplace la plaque mobile le long de l'axe Y. Or la plaque mobile est suspendue au dessus du support, un espace est présent entre les bords latéraux de la plaque mobile et le support et entre la face inférieure de la plaque mobile et le support. Or le fluide peut s'écouler entre la plaque mobile et le support, et appliqué un effort parasite sur la plaque mobile et ainsi fausser les mesures. Les exemples représentés sur les figures 6A à 11B comportent des moyens pour réduire, voire supprimer, ces efforts parasites.

Sur les figures 6A et 6B, on peut voir un exemple de réalisation d'un capteur de débit C5 dans lequel la plaque mobile et le support sont structurés de sorte à limiter le débit parasite. La plaque mobile et le support sont structurés de sorte à délimiter au moins en une zone une section de passage réduite pour le fluide. Dans l'exemple représente et de manière préférée, la face inférieure de la plaque mobile 2 comporte un décrochement 34 et le support 4 comporte en regard un décrochement correspondant 36 en regard qui délimitent entre eux une section de passage réduite par rapport à la section délimitée normalement entre la plaque mobile 2 et le support 4. Le débit de fluide pouvant s'écouler sous la plaque est ainsi réduit. En structurant la face inférieure de la plaque mobile, l'entrefer latéral entre la plaque mobile et le support peut ne pas être réduit. En variante seul le support ou seule la face 2.2 de la plaque mobile peut être structuré.

Par ailleurs, de préférence les connexions électriques 38 sont formées en face arrière, évitant la présence de saillies en face avant dans le flux afin de limiter les perturbations du flux. Ceci s'applique à tous les dispositifs selon l'invention. Les connexions sont réalisées par exemple par des vias de type TSV (through silicon via en terminologie anglo-saxonne).

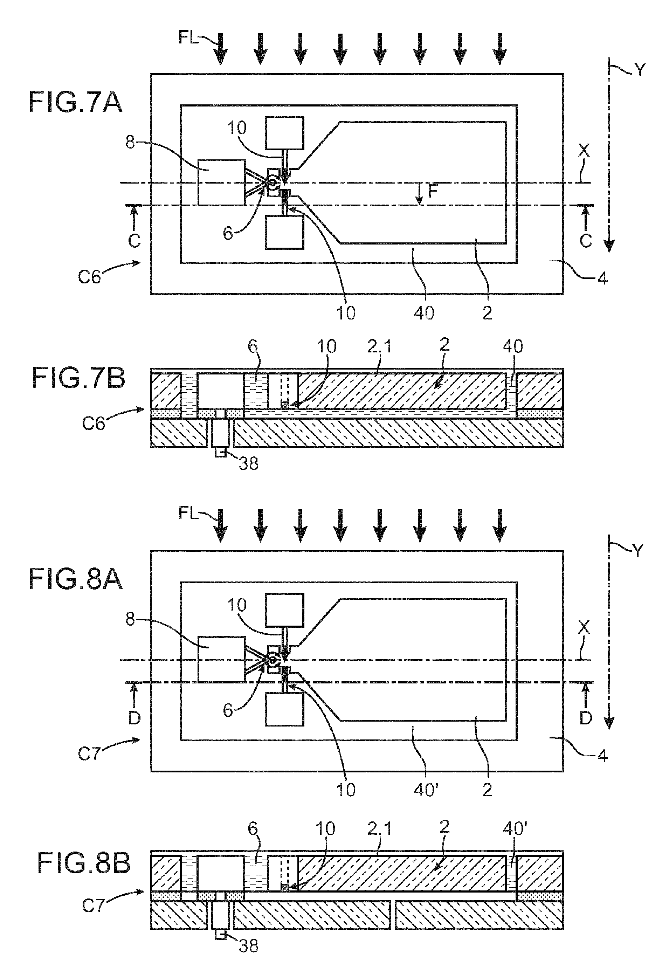

Sur les figures 7A et 7B, on peut voir un exemple de réalisation d'un capteur C6 dans lequel le débit parasite est supprimé.

Le dispositif comporte un élément 40 remplissant l'entrefer entre la face inférieure 2.2 de la plaque mobile 2 et le support 4 et entre les bords latéraux de la plaque mobile 2 et le support 4 et recouvrant la face supérieure 2.1 de la plaque mobile. L'élément 40 présente une souplesse suffisante pour ne pas gêner le déplacement de la plaque mobile sous l'effet du flux sur la face supérieure de la plaque mobile. L'élément est par exemple en polymère ou en polyimide. La raideur du matériau polymère sous la plaque et sur les flancs de la plaque est avantageusement au moins 10 fois inférieure à la raideur de la structure mécanique MEMS. L'élément 40 assure une encapsulation complète de la plaque mobile 2.

L'élément 40 est par exemple déposé par dépôt en phase liquide par centrifugation ("spin-coating" en anglais) au niveau du support, ou simplement par dispense à l'aide d'une seringue sur chacune des structures, par exemple après libération de la plaque mobile 2.

Dans cet exemple, puisqu'aucun fluide ne peut s'écouler entre la plaque mobile et le support, aucun débit parasite n'est présent.

On pourrait prévoir que l'espace entre le capteur et les bords latéraux de l'évidement pratiqué dans la paroi du canal soit rempli d'un matériau, évitant avantageusement l'apparition de turbulences.

Sur les figures 8A et 8B, on peut voir une variante C7 du capteur des figures 7A et 7B, dans laquelle l'élément 40' remplit uniquement l'entrefer latéral entourant la plaque mobile et recouvre la face 2.1 de la plaque mobile. Il forme alors une barrière à l'écoulement du fluide entre la plaque mobile et le support et sous la plaque mobile. L'élément 40' est par exemple mis en place avant libération de la plaque mobile qui est libérée par des ouvertures réalisées dans la face arrière. L'élément est par exemple en polymère ou en polyimide.

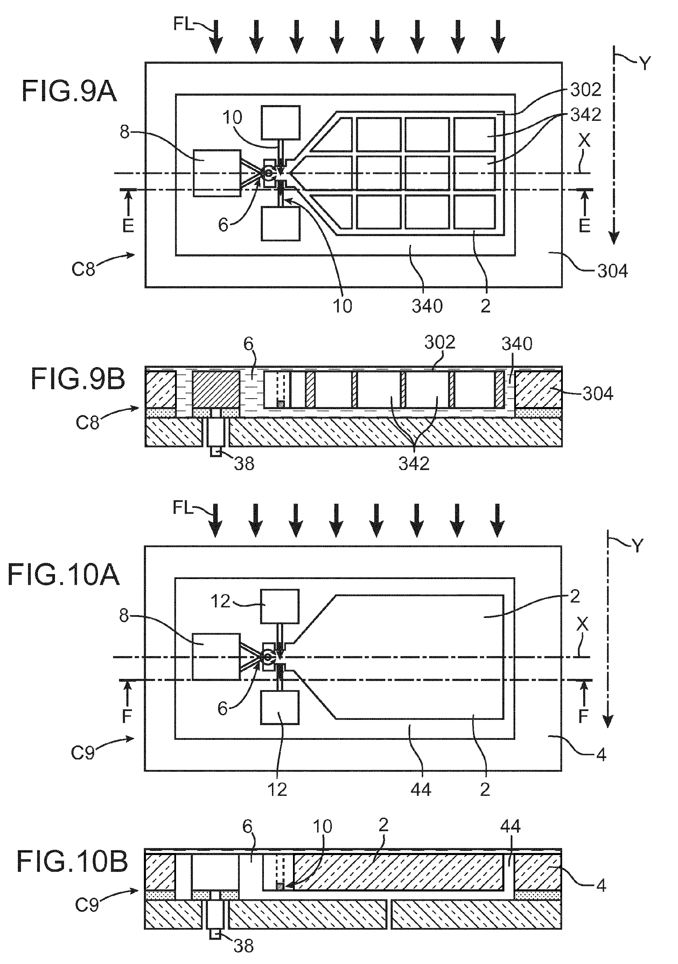

Sur les figures 9A et 9B, on peut voir une variante de réalisation C8 du capteur des figures 7A et 7B, dans laquelle la plaque mobile 302 comporte des lumières 342 et un élément 340 remplissant à la fois l'entrefer latéral entre la plaque mobile 302 et le support 304, l'entrefer entre la face inférieure de la plaque mobile et le support, remplissant les lumières et recouvrant la surface supérieure de la plaque mobile. Cette variante présente l'avantage de limiter l'effet de la pression du fluide sur le dispositif. Les forces tangentielles appliquées par le fluide sur la plaque mobile sont alors en partie transmises par le matériau souple.

Sur les figures 10A et 10B, on peut voir une autre variante C9 du capteur de figures 7A et 7B, dans laquelle le passage du fluide est empêché au moyen d'un film sec 44 déposé sur la surface supérieure de la plaque mobile, du support et chevauchant l'entrefer latéral entre la plaque mobile 2 et le support 4. La plaque mobile 2 est alors partiellement encapsulée. Le film 44 forme alors une barrière pour le fluide, les débits parasites sont alors supprimés. Le film est par exemple en polymère ou polyimide. Le film sec est par exemple collé ou déposé par laminage avant ou après libération de la plaque mobile.

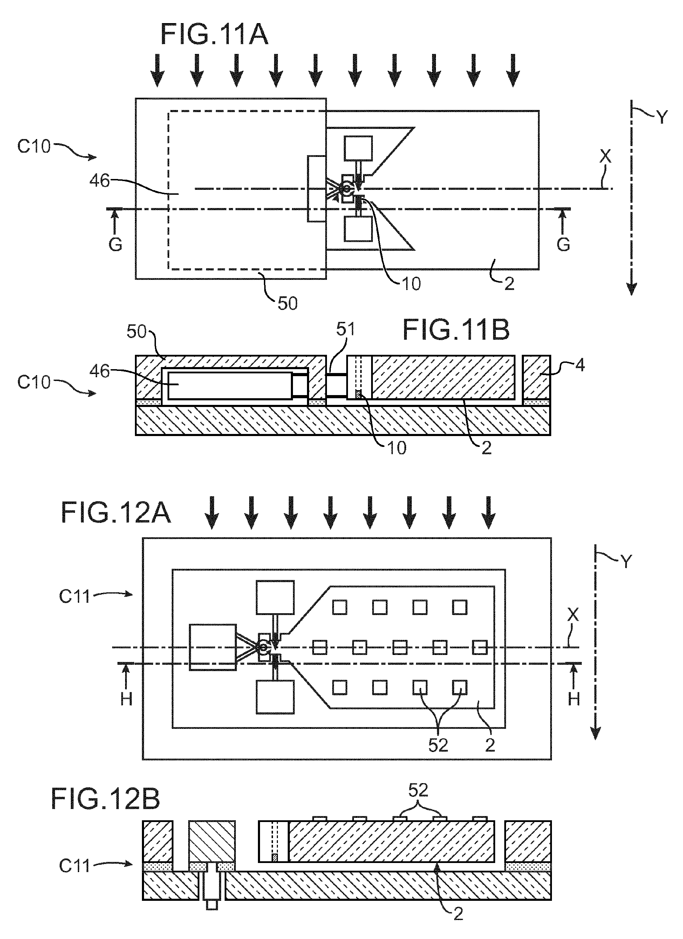

Sur les figures 11A et 11B, on peut voir un exemple de réalisation C10 d'un capteur selon l'invention présentant une sensibilité réduite aux accélérations et vibration parasites. Par exemple, le conduit dans lequel on souhaite mesurer le débit peut être soumis à des vibrations susceptibles de fausser les mesures par déplacement de la plaque mobile sous l'effet des contraintes de cisaillement.

Le capteur C10 comporte un élément 46 formant contrepoids relié rigidement à la plaque mobile. Ce contrepoids 46 est rattaché à la plaque mobile de sorte que la liaison pivot soit située entre la plaque mobile et le contrepoids. En outre, le dispositif comporte des moyens 50 pour protéger le contrepoids 46 du fluide à mesurer afin qu'il n'intervienne pas dans la mesure. Le moyens 50 sont par exemple formés par un capot recouvrant le contrepoids 46, ainsi le fluide n'entre pas en contact avec le surface supérieure du contrepoids et n'exerce pas sur lui de contraintes de cisaillement. Ce contrepoids permet de rendre moins sensible la plaque mobile 2 aux accélérations et vibrations parasites. Ainsi seules les contraintes de cisaillement appliquées par le fluide mettent en mouvement la plaque mobile 2 et sont vues par les jauges.

Dans l'exemple représenté, la plaque mobile 2 et le contrepoids 46 sont reliés par deux poutres 51 s'étendant le long de l'axe X de part de d'autre de la liaison pivot. Cette réalisation n'est pas limitative et toute autre réalisation entre dans le cadre de la présente invention

Sur les figures 12A et 12B, on peut voir un autre exemple de réalisation C11 dans lequel la force tangentielle appliquée par le flux sur la plaque mobile est accrue. Pour cela, la plaque mobile 2 comporte sur sa face supérieure des éléments en saillie 52. Dans l'exemple représenté il s'agit de plots à section carrée répartis sur toute la surface supérieure de la plaque mobile. Les saillies sont réparties ici en lignes parallèles à l'axe X et disposés en quinconce. Ces saillies ont une hauteur limitée de sorte qu'elles ne dépassent pas de la zone où s'appliquent les contraintes de cisaillement. De préférence la hauteur des saillies est inférieure ou égale à 100 µm. La forme ces saillies n'est pas limitative, d'autres formes peuvent convenir...

Grâce à l'invention, on réalise un système de mesure de force tangentielle dont la sensibilité du capteur est fortement augmentée par rapport à ce qui se fait dans l'état de l'art en séparant la partie mécanique de la partie détection. En outre, le capteur selon l'invention met en oeuvre un bras de levier entre la plaque mobile et la ou les jauges, ce qui permet d'amplifier les contraintes vues finalement par les jauges, la sensibilité est encore augmentée. Il est également possible d'utiliser une jauge ou des jauges suspendues amincies par rapport à la partie mécanique de l'élément mobile pour accroître la concentration de contrainte, ce qui permet d'augmenter encore la sensibilité.

Il en résulte qu'en augmentant la sensibilité du capteur il est possible de réduire la surface de la plaque mobile, donc de miniaturiser davantage le capteur et donc d'augmenter sa résolution spatiale.

Le système selon l'invention est particulièrement adapté à la réalisation de mesures différentielles, et la réalisation de demi-pont de Wheatstone ou de pont Wheatstone entier.

De plus, l'invention met en oeuvre des jauges suspendues, ce qui évite l'apparition de courants de fuite à haute température comme dans le cas de jauges implantées ou diffusées des débitmètres piézorésistifs de l'état de la technique. L'invention permet alors de réalisation des débitmètres ne présentant pas cette limitation en température d'utilisation.

Un exemple d'un procédé de réalisation d'un capteur mis en oeuvre dans le système selon l'invention.

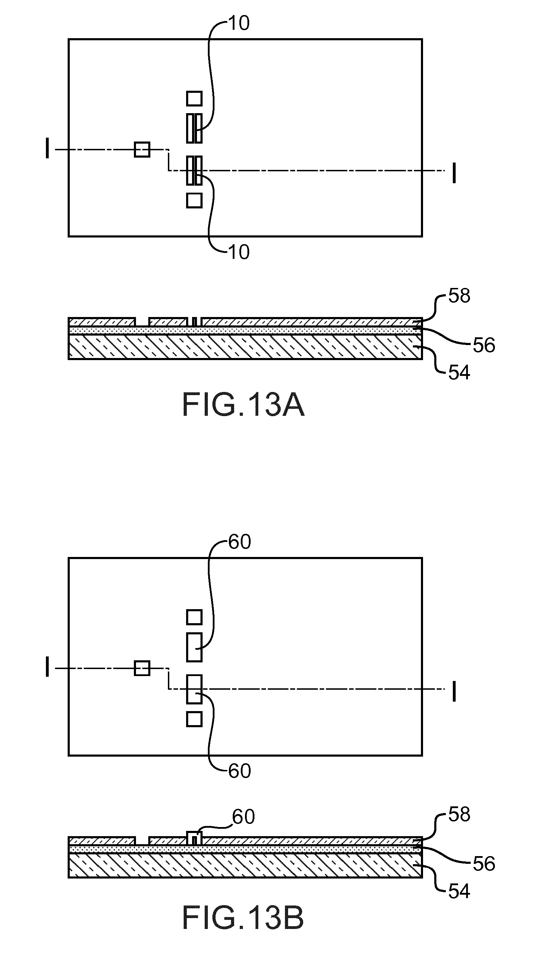

Sur les figures 13A à 13G, on peut voir les différentes étapes d'un exemple d'un procédé de réalisation d'un capteur. Chaque figure représente l'élément obtenu au cours des différentes étapes en vue de dessus en en coupe le long des plans désignés I-I sur la vue de dessus.

On part par exemple d'un substrat SOI (silicium on insulator) comportant par exemple une couche de silicium 54, une couche d'oxyde de silicium (buried oxide) 56 ayant par exemple une épaisseur de 2 µm, et une couche de silicium 58, par exemple d'épaisseur comprise entre quelques dizaines de nm et quelques µm sur la couche 56. La couche 56 forme la couche sacrificielle. On pourrait également réaliser l'empilement en reportant la couche 58 de Si sur l'empilement des couches 54 et 56, ou effectuer un dépôt de cette couche 58 sur la couche 56. De préférence, la couche 58 est en silicium monocristallin.

Il est ensuite procédé à une photolithographie, puis à une gravure de la couche 58 de silicium pour définir la jauge piézorésistive 10 et définir la zone de contact avec le substrat. La gravure est arrêtée sur la couche de SiO₂.

L'élément ainsi obtenu est représenté sur les figures 13A.

Lors d'une étape suivant, on forme une couche d'oxyde par exemple par dépôt, par exemple du SiO₂, par exemple d'épaisseur comprise entre 1 µm et 2µm, destinée à former une couche d'arrêt. La couche d'oxyde est par exemple déposée par dépôt chimique en phase vapeur assisté par plasma (ou PECVD pour Plasma-Enhanced Chemical Vapor Deposition en terminologie anglaise).

Ensuite, est réalisée une photolithographie destinée à délimiter des portions 60 d'oxyde recouvrant les jauges piézorésistives. Une gravure de la couche d'oxyde est ensuite réalisée avec arrêt sur la couche 58, supprimant celle-ci sauf au niveau de la portion 60. L'oxyde dans la zone de contact avec le substrat est également gravé. Un décapage peut être effectué pour supprimer les résidus de gravure et du masque.

L'élément ainsi obtenu est représenté sur les figures 13B.

Lors d'une étape suivante, on forme une couche 62, par exemple en silicium sur la couche 58. La couche 62 est formée de préférence par croissance épitaxiale sur la couche 58 de Si et sur les portions 60 d'oxyde. Cette couche a par exemple une épaisseur comprise ente 1µm et quelques dizaines de µm.

Un polissage mécano-chimique peut ensuite avoir lieu.

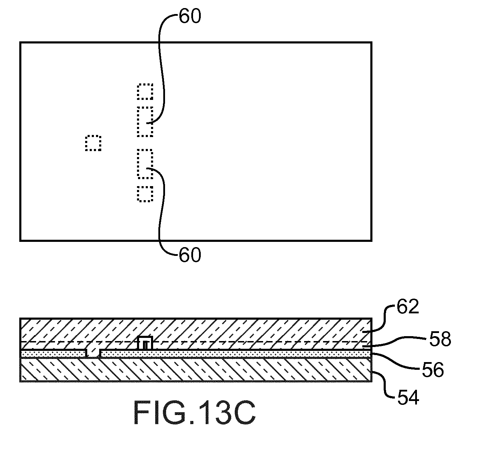

L'élément ainsi obtenu est représenté sur les figures 13C.

Lors d'une étape suivante on effectue une photolithographie destinée à délimiter la partie mobile, les plots d'ancrage et pour supprimer la portion 60 au-dessus des jauges piézorésistives par une gravure sélective de la couche 62. On effectue ensuite des gravures verticales 64 dans l'épaisseur de la couche 62 avec arrêt sur la couche d'oxyde 56 et la portion d'oxyde 60.1 par exemple par gravure ionique réactive profonde ou DRIE (Deep Reactive Ion Etching).

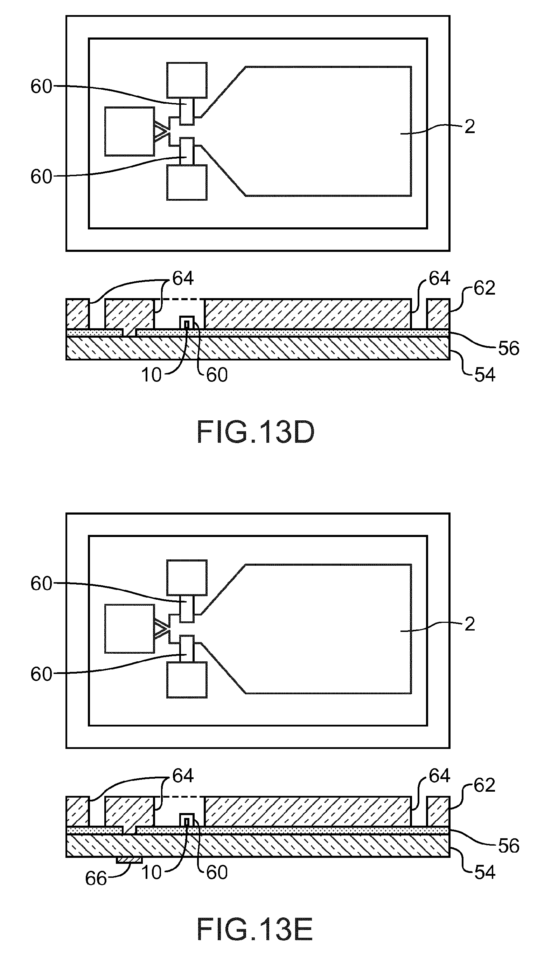

L'élément ainsi obtenu est représenté sur les figures 13D.

Lors d'une étape suivante, on métallise la face arrière du substrat pour réaliser les connexions électriques. Par exemple, on dépose une couche de AlSi 66 sur toute la face arrière du substrat.

On effectue ensuite une lithographie et une gravure de la couche 66 définissant ainsi les plots de contact.

L'élément ainsi obtenu est représenté sur la figure 13E.

Lors d'une étape suivante, on réalise un détourage des plots de contact par gravure du substrat par la face arrière avec arrêt sur la couche de SiO₂ 56. La gravure est par exemple une gravure DRIE.

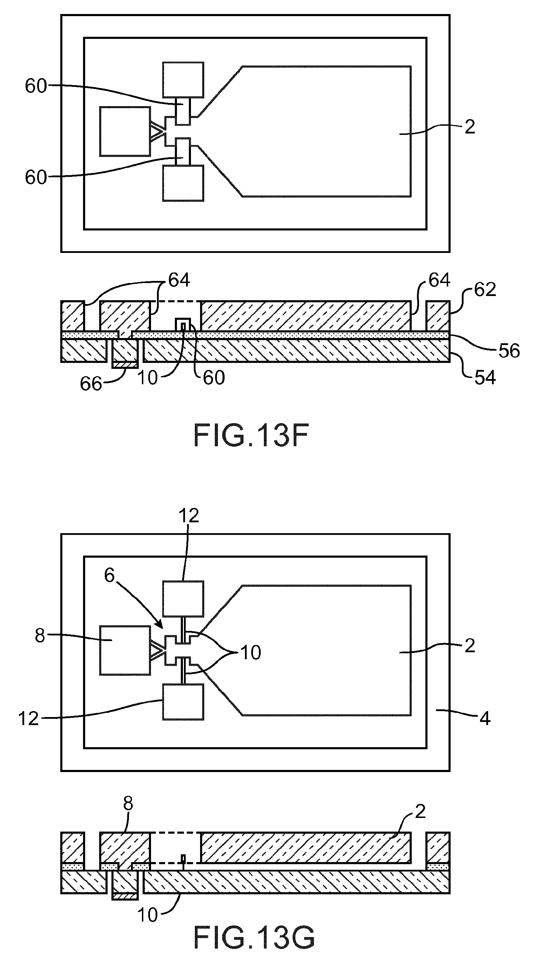

L'élément ainsi obtenu est représenté sur les figures 13F.

Lors d'une étape suivante, on libère la plaque mobile 2 et la liaison pivot, en supprimant partiellement la couche d'oxyde 56 et on libère les jauges piézorésistives 10 en retirant la portion 60.1, par exemple au moyen d'acide sulfurique vapeur. Il s'agit d'une gravure au temps. L'acide sulfurique est laissé au contact de la couche d'oxyde 56 et de l'oxyde 60.1 le temps nécessaire pour libérer la plaque mobile et les jauges tout en laissant de la couche sacrificielle sous les parties fixes du système.

L'élément ainsi obtenu est représenté sur les figures 13G.

Le capteur est par exemple réalisé sur une carte ou sur un boîtier 67 permettant de sortir les contacts 69 (figure 15A). Ensuite, un perçage 68 est réalisé dans la paroi latérale du conduit 22 dans lequel on veut disposer le capteur (figure 15B) et le capteur est monté de manière étanche dans le perçage 68 par l'intermédiaire de la carte ou du boîtier 67 et d'un joint 70 disposé entre le boîtier 67 et la surface extérieure du conduit 22 de sorte que la plaque mobile voit le débit de fluide dans le conduit 22 (figure 15C). Le capteur peut ensuite être connecté à un système extérieur.

On peut envisager de mettre en oeuvre un réseau de capteurs.

Le dispositif selon l'invention permet de mesurer une force tangentielle appliquée par un fluide qu'il soit liquide ou gazeux.

Il peut alors permettre de réaliser des capteurs de débit offrant une grande sensibilité, il peut être utilisé pour mesurer des débits de liquide ou de gaz. Plusieurs capteurs peuvent être intégrés dans la paroi d'un conduit dans un ou plusieurs évidements ou une ou plusieurs traversées. Par exemple il peut être installé dans une canalisation de gaz ou d'eau, par exemple équipant des maisons individuelles pour mesurer les consommations des abonnés.

Il peut également permettre de déterminer la viscosité d'un fluide à partir de la mesure d'un débit connu.

## Revendications

1. Système de mesure d'une force tangentielle exercée par un fluide, ledit système comportant :
- un conduit dans lequel est destiné à s'écouler le fluide, le conduit s'étendant sur au moins portion dans une direction donnée (Y), dite direction d'écoulement, le conduit comportant une surface intérieure destinée à être en contact avec le fluide, et au moins une cavité (24) disposée dans ladite surface intérieure du conduit (22),
- au moins un dispositif MEMS et/ou NEMS de mesure de force tangentielle comportant un support (4, 104, 204, 304) présentant un plan moyen et une plaque mobile (2, 102, 202, 302), ladite plaque mobile étant suspendue au support par au moins une liaison pivot (6), ladite liaison pivot (6) ayant un axe perpendiculaire au plan moyen du support (4), ladite plaque mobile (2) comportant une première face (2.1) sur laquelle le fluide applique une force tangentielle et une deuxième face (2.2) opposée à la première face (2.1), ledit dispositif étant solidaire du conduit et étant disposé dans la cavité de sorte que la première face (2.1) de la plaque mobile affleure au moins une zone de la surface intérieure du conduit (22) entourant la cavité (24), ledit dispositif comportant également au moins une jauge de contrainte piézorésistive (10) suspendue et mécaniquement liée à la plaque mobile (2, 102, 202) et au support, ladite jauge (10) étant disposée dans la cavité de sorte que la force tangentielle appliquée à la première surface (2.1) de la plaque mobile par le fluide selon la direction d'écoulement (Y) applique une force de compression ou de traction à ladite jauge de contrainte piézorésistive.

2. Système de mesure selon la revendication 1, dans lequel la distance séparant le plan contenant la première face (2.1) de la plaque mobile (2) et le plan contenant au moins la zone entourant la cavité (24) est inférieure ou égale à 200 µm et avantageusement inférieure ou égale à 100 µm.

3. Système de mesure selon la revendication 1 ou 2, dans lequel la jauge (10) est disposée au plus près de l'axe de la liaison pivot (6).

4. Système de mesure selon l'une des revendications 1 à 3, comportant au moins deux jauges (10) montées en différentielle connectées électriquement en demi-pont de Wheatstone ou au moins quatre jauges montées en différentielle connectées électriquement en pont de Wheatstone.

5. Système de mesure selon l'une des revendications 1 à 4, dans lequel la plaque mobile (102, 202) est suspendue au support par deux liaisons pivot (106, 106') ledit dispositif comportant au moins deux jauges piézorésistives (110, 110').

6. Système de mesure selon la revendication précédente, dans lequel au moins un bras de transmission d'effort rigide (127, 129, 127', 227', 227, 229) relie la plaque mobile (102, 202) à chaque liaison pivot (106, 106'), au moins une jauge de contrainte piézorésistive (110, 110') étant suspendue entre un bras de transmission de force et le support.

7. Système de mesure selon la revendication précédente, dans lequel chaque bras de transmission de force (127, 129, 127', 227', 227, 229) est relié à la plaque mobile (102, 202) par au moins des moyens déformables élastiquement (128, 130, 128', 130', 228, 230) au moins dans la direction perpendiculaire à l'écoulement du fluide.

8. Système de mesure selon l'une des revendications 1 à 7, dans lequel la jauge de contrainte présente une épaisseur comprise entre 100 nm et 500 nm et la plaque mobile a une épaisseur comprise entre 3 µm et 40 µm.

9. Système de mesure selon l'une des revendications 1 à 8, dans lequel la liaison pivot (6) comporte deux poutres (6.1, 6.2) sensiblement de même longueur ancrées sur le support en deux points distincts et ancrées sur la plaque mobile (2)en un point par lequel passe l'axe (Z) de la liaison pivot (6).

10. Système de mesure selon l'une des revendications 1 à 9, comportant des moyens pour limiter le débit de fluide entre la plaque mobile et le support.

11. Système de mesure selon la revendication précédente, comportant une structuration (34, 36) du support (4) et/ou de la plaque mobile (2) de sorte à ménager au moins une zone de section d'écoulement réduite entre le support (4) et la plaque mobile (2).

12. Système de mesure selon la revendication précédente, dans lequel la structuration (34, 36) est réalisée sur la deuxième face (2.1) de la plaque mobile (2) et/ou sur une zone du support (4) en regard de ladite face.

13. Système de mesure selon l'une des revendications 1 à 12, comportant des moyens pour empêcher l'écoulement de fluide entre la plaque mobile et le support.

14. Système de mesure selon la revendication précédente, comportant un élément souple (40, 40') encapsulant au moins partiellement la plaque mobile (2) et empêchant le fluide de s'écouler entre la plaque mobile (2) et le support (4).

15. Système de mesure selon la revendication précédente, dans lequel l'élément (40, 40', 44) est un polymère ou un polyimide.

16. Système de mesure selon la revendication 13, dans lequel les moyens pour empêcher l'écoulement de fluide entre la plaque mobile et le support comportent un film (44) en matériau souple recouvrant la première face (2.1) de la plaque mobile (2) et au moins une partie du support (4).

17. Système de mesure selon l'une des revendications 14, 15 ou 16, dans lequel la plaque mobile comporte des lumières, lesdites lumières étant obturées par l'élément souple ou par le film.

18. Système de mesure selon l'une des revendications 1 à 17, comportant des moyens pour réduire la sensibilité aux accélérations et vibrations parasites.

19. Système de mesure selon la revendication précédente, dans lequel lesdits moyens (46, 50) pour réduire la sensibilité aux accélérations et vibrations parasites comportent un contrepoids (46) solidaire de la plaque mobile (2) et protégé du fluide de sorte à ne pas subir de force tangentielle.

20. Système de mesure de débit d'un fluide s'écoulant dans un conduit comportant au moins un système de mesure selon l'une des revendications 1 à 19.

21. Procédé de réalisation d'un système de mesure selon l'une des revendications 1 à 19, ce procédé comportant :
- la formation d'une cavité dans la surface intérieure d'un conduit,
- la réalisation d'un dispositif de mesure de force tangentielle à partir d'un empilement formé d'un substrat, d'une couche sacrificielle et d'au moins une première couche (58) d'un matériau conducteur ou semi-conducteur, comprenant la réalisation d'au moins une jauge piézorésistive dans la première couche, la réalisation de la plaque mobile et de la au moins une liaison pivot dans ledit empilement et la libération de la jauge, de la plaque mobile et de la liaison pivot.

22. Procédé de réalisation d'un système de mesure selon la revendication 21, dans lequel après la formation de la jauge, une portion de protection est formée sur ladite jauge préalablement à la formation d'une deuxième couche d'un matériau conducteur ou semi-conducteur sur la première couche d'un matériau conducteur ou semi-conducteur.

23. Procédé de réalisation d'un système de mesure selon la revendication 22, dans lequel suite à la formation de la portion de protection, la deuxième couche d'un matériau semi-conducteur, conducteur ou isolant est formée sur la première couche d'un matériau conducteur ou semi-conducteur, et dans laquelle la plaque mobile et la liaison pivot sont réalisées au moins en partie.

24. Procédé de réalisation d'un système de mesure selon l'une des revendications 21 à 23, comportant une étape de remplissage d'au moins l'entrefer latéral entre la plaque mobile et le support, ledit remplissage étant par exemple réalisé par dépôt en phase liquide par centrifugation pour former des moyens pour empêcher l'écoulement de fluide entre la plaque mobile et le support.

25. Procédé de réalisation d'un système de mesure selon l'une des revendications 21 à 23, comportant une étape de formation d'un film sur la plaque mobile et sur au moins une partie du support de sorte à obturer l'entrefer latéral entre la plaque mobile et le support, ledit film étant par exemple formé par laminage pour former des moyens pour empêcher l'écoulement de fluide entre la plaque mobile et le support.
